# EUROPEAN PATENT APPLICATION

(11) **EP 1 618 818 A1**
(43) Date of publication of application: **25.01.2006**
(21) Application number: 05106303.0
(22) Date of filing: 11.07.2005
(51) Int. Cl.: A47J 31/50, B67D 1/08

(54) **Sabbath urn having associated second vessel and accessories therefor**

(30) Priority: 11.07.2004 IL 16295104
(71) Applicant: Elvik Lighting Services Ltd., Rinatia (IL)
(72) Inventor: Soryas, Avraham, 71908 Modi'in Elit (IL)
(74) Representative: Weichinger, Andras

(57) **Abstract**

An urn (10) for use by Orthodox Jews on the Sabbath has a body portion (11) for containing hot liquid and maintaining it at a temperature higher than 40°C and a main faucet (12) depending from a side wall thereof for controllably siphoning off a quantity of hot liquid. A support (13) supports an auxiliary vessel (14) having an opening (15) aligned with the main faucet so that opening the main faucet allows hot liquid to pour directly into the auxiliary vessel, thereby preventing or reducing accidental pouring of the hot liquid into a vessel containing food or powdered beverage. A kit allows an urn to be adapted for supporting the auxiliary vessel and may include a height raiser (21) for raising the urn so increase a clearance between the main faucet and a surface on which the urn is placed.

## Description

### FIELD OF THE INVENTION

This invention relates to an urn that is used by orthodox Jews on the Sabbath to maintain an available supply of hot water.

### BACKGROUND OF THE INVENTION

Jewish Law prohibits cooking on the Sabbath Day. The definition of "cooking" is somewhat more stringent for liquids than for solid food and according to most authorities it is forbidden to heat water, or any other liquid for that matter, beyond the temperature of approximately 40°C, this constituting "cooking". On the other hand, liquids that have already reached the temperature of 40°C or higher before the onset of the Sabbath may be maintained at that temperature and, indeed, the temperature may even be raised without breaking the Law. Not only is the heating of liquids from a temperature below 40°C to a higher temperature forbidden but it is also forbidden to use liquids that have been so heated on the Sabbath.

Although such cooking is forbidden, the Sabbath is intended to be a "delight" and throughout the centuries Jewish Law has permitted various approaches so as to permit the consumption of hot foods and liquids on the Sabbath Day. Thus, hot water, for example, may be boiled before the onset of the Sabbath and then maintained at near boiling point either by placing the vessel in which the water has been boiled on a heat source, such as a gas stove or an electric ring and the like or, more commonly nowadays, using an electric urn containing an electric heating element that is thermostatically controlled so as to maintain the water at the desired temperature.

For the purpose of the present invention, it is not significant how the water is maintained at the desired temperature and therefore the general term "urn" will be employed, it being understood that this term encompasses within its scope any type of urn that either includes an integral heating element or, alternatively is adapted to be placed on a source of heat. According to Jewish Law such a vessel is termed a "first vessel" (in Hebrew a *kli rishon)* meaning that the vessel itself constitutes a heat source. The reason for this is that cooking vessels are normally formed from materials that are good thermal conductors in order to conduct heat from an external source, such as an electric or gas ring, to the contents of the cooking vessel. Since the wall of the cooking vessel thus becomes hot, it continues to provide thermal energy to the contents of the vessel even after the vessel is removed from the primary source of heat. This extended heating via the wall of the vessel may cause the contents of the vessel to continue to cook even after the vessel is removed from the primary source of heat. For this reason, Jewish Law does not differentiate between the primary source of heat, such as a gas or electric ring, and the vessel placed directly thereon (or having an integral heating element) and such a vessel is referred to as a "first vessel" since it, too, serves as a primary heat source.

It is permissible to pour water from such a "first vessel" into a container and then to drink the water therefrom. However, it is not permissible on the Sabbath to pour water directly from a "first vessel" into another vessel for the purpose of *cooking.* Thus, on the Sabbath it is not permissible to place a tea bag into an empty cup and then to fill that cup directly from a "first vessel" since this is considered cooking and is therefore forbidden. Many authorities, however, permit the use of a tea bag on the Sabbath (although some do not) providing that the boiling water in the "first vessel" has been allowed to cool down significantly by siphoning it into an intermediate vessel from which it may then be poured into a tea cup, for example, into which a tea bag may then be immersed. The present invention is not concerned with the intricacies of Sabbath observance other than to remark that it is all too easy to forget that boiling water from the "first vessel" may not be poured directly onto foods, including granulated foodstuffs such as soup powder, coffee granules and tea, directly and that to the extent that such cooking is permissible it can be done only via an intermediate vessel known as a "second vessel" (in Hebrew a *kli sheni).*

Since non-compliance with these rules constitutes an infringement of the Sabbath Laws and since the primary authority for these Laws derives from biblical injunction, orthodox Jews take these laws very seriously.

It would therefore be desirable to provide an urn that has a "second vessel" associated therewith so that unintentional pouring from the urn directly into a cooking vessel may be obviated.

It has been noted above that the laws that proscribe cooking on the Sabbath apply not only to water but, indeed, to all liquids. Therefore, whilst the present invention will refer to the use of an urn for heating water, since this is the most common usage on the Sabbath, this is not to imply any limitation and the principles of the invention may equally well be applied to the heating of other liquids such as, for example, oil or milk, which are subject to the same stringencies.

It is known in the art to provide vessels that are filled with hot liquids from a suitable hot water reservoir. For example, electric filter coffee makers drip boiling water through a filter paper containing coffee granules into a glass container, which thus fills with filtered coffee. Commonly the glass container is located on top of a heating element so that the coffee does not cool after it has dripped into the container. Such devices are shown, for example, in US Patent Nos. 4,725,714 (Naya *et al.)* and 4,069,750 (Kemp). The glass container in such coffee makers is located underneath an opening in the hot water reservoir so that once water in the reservoir boils it drips under gravity into the container. It is not possible to control this and the coffee percolation continues until all the water in the reservoir passes into the container: a smaller, partial volume cannot be siphoned off. To this end, the capacity of the reservoir is necessarily limited and insufficient for the whole 25 hour period of the Jewish Sabbath.

As opposed to such an arrangement, US Patent No. 4,869,158 (Brewer) discloses a beverage brewing apparatus capable of discharging brewed beverage either into a carafe disposed directly beneath the brewing funnel or into a container taller than a carafe and too tall to fit directly under the funnel. The apparatus comprises a beverage brewer of the type in which brewed beverage discharges from a brewing funnel into a carafe supported directly below and a kit for converting the beverage brewer so as to permit brewed beverage to discharge into either a carafe or a container, such as an air pot which is too tall to fit directly under the funnel.

The kit comprises legs to support the beverage brewer in an elevated position, an elongated spigot, and means for readily attaching and detaching the spigot to a discharge fitting of the brewing funnel. The spigot extends laterally to one side of the brewer so as to discharge into a tall container disposed at one side of the brewer.

In such an arrangement, the tall container could conceivably serve the function of a second vessel as understood herein and water siphoned off from the brewer into such a container could then be used to prepare hot drinks without infringing the strict Sabbath rules. However, the arrangement described in US Patent No. 4,869,158 is similar to that shown in US Patent No. 4,464,981 (Stover) to which Brewer makes reference. It is clear that here, too, only a limited reservoir is provided and is not functional as a reservoir for use during the whole 25 hour period of the Jewish Sabbath. However, of greater significance so far as Jewish Law is concerned, is the fact that the reservoir stores cold water which discharges cold water from the reservoir into a hot water tank as hot water is siphoned off during use. As a result the incoming cold water is heated in the hot water tank and this is not permissible on the Sabbath.

In order to be functional for Sabbath use, it is essential that the reservoir hold sufficient boiling water to last for the whole 25 hour period of the Jewish Sabbath since it is not permissible to re-fill the reservoir during the Sabbath owing to the prohibition of boiling water from less than 40°C to boiling point. Since the reservoirs in the all of the above-referenced patents are so limited, they cannot even considered for use as Shabbat urns and therefore there is no reason or motivation to modify them for siphoning water into an auxiliary vessel.

Moreover, at least in the case of the brewers shown in US Patent Nos. 4,869,158 and 4,464,981, the auxiliary vessel, such as the air pot shown in US Patent No. 4,869,158, is not *a priori* associated with the brewer but is a completely separate vessel that cannot be attached to the brewer or supported thereby. Also, in order to allow the water to be siphoned into the tall container, an elongated spigot must be attached to a spout from which water (or beverage) normally spills into a receiving vessel. This is done via a threaded attachment, which effectively neutralizes the spout from regular use for other, smaller vessels. The elongated spigot has no faucet and so here, too, beverage drips uncontrollably into the receiving vessel.

### SUMMARY OF THE INVENTION

It is an object of the invention to provide an urn that has a "second vessel" associated therewith so that unintentional pouring from the urn directly into a cooking vessel may be obviated.

This object is realized in accordance with a broad aspect of the invention by an urn for use by Orthodox Jews on the Sabbath, said urn having a body portion for containing hot liquid and maintaining it at a temperature higher than 40°C and a main faucet depending from a side wall thereof for controllably siphoning off a quantity of said hot liquid, said urn further comprising a support for supporting an auxiliary vessel having an opening aligned with the main faucet so that opening the main faucet allows hot liquid to pour directly into the auxiliary vessel, thereby preventing or reducing accidental pouring of the hot liquid into a vessel containing food or powdered beverage.

Within the context of the invention and the appended claims the term "urn" relates to an urn that complies with the legal stringencies of the Jewish Sabbath and holidays. To this end, during the Sabbath the water must be maintained hot and in any event must not be heated from less 40°C to a higher temperature. This requires that the urn be self-contained and precludes the provision of a water input for replenishing water that is siphoned off with cold water, since such water would be heated from cold to near boiling: and this contravenes the Sabbath laws as explained above.

Thus the invention permits the auxiliary vessel serving as the "second vessel" to be attached to the urn during normal use, thereby avoiding or at least minimizing the risk of siphoning of boiling water from the urn directly to a utensil containing foodstuffs, particularly liquids. Within the context of the invention and the appended claims, the term "auxiliary vessel" is a "second vessel" that complies with the legal stringencies of Jewish Law regarding the prohibition of cooking liquids on the Jewish Sabbath. To this end the auxiliary vessel is an intermediate vessel for transferring hot liquid from the urn to a vessel containing food particles, granules, powder, and the like or to such a vessel wherein such foodstuffs will be added after they are filled with hot water from the urn.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** is a pictorial representation of a Shabbat urn according to a first embodiment of the invention;
**Fig. 2** is a pictorial representation of a Shabbat urn according to a second embodiment of the invention;
**Fig. 3** is a pictorial representation of a Shabbat urn according to a third embodiment of the invention;
**Figs. 4, 5 and 6** are pictorial representations of different "second vessels" for use with a Shabbat urn according to the invention; and
**Fig. 7** is a pictorial representation of a height raiser for use with a Shabbat urn according to the invention.

### DETAILED DESCRIPTION OF EXEMPLARY EMBODIMENTS

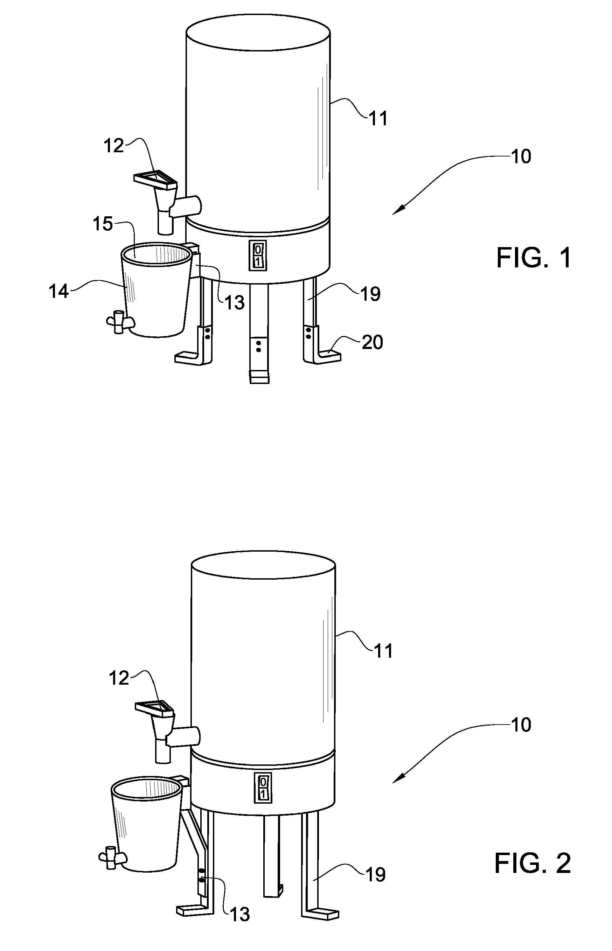

Figs. 1, 2 and 3 show pictorially an electric urn 10 having a body portion 11 for containing hot liquid and a faucet 12 (constituting a "main faucet") depending from a side wall thereof for siphoning off a quantity of hot liquid. The urn 10 further comprises a support 13 for supporting an auxiliary vessel 14 having an opening 15 aligned with the main faucet 12 so that opening the main faucet allows hot liquid to pour directly into the auxiliary vessel 14.

The auxiliary vessel 14 is preferably provided on an internal surface thereof with a lining of thermally insulating material, so that even if its wall is formed of thermally conductive material, such as metal, its internal wall is insulated from heat when boiling water is poured therein. If desired, the auxiliary vessel may be formed of thermally insulating material such as plastics.

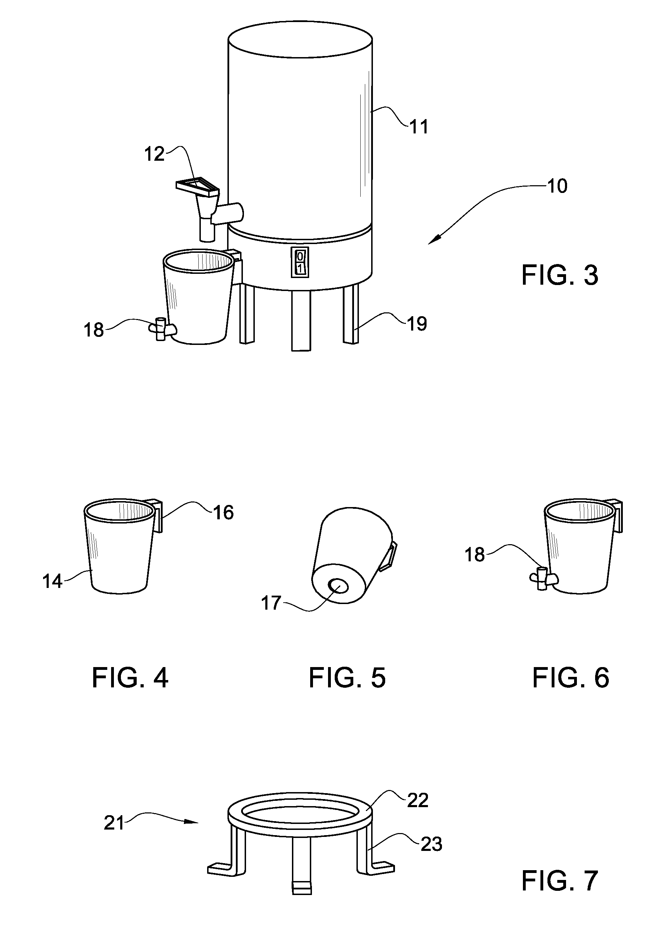

Fig. 4 shows pictorially a first embodiment of the auxiliary vessel 14, which is simply a cup-like vessel having a bracket 16 for engaging the support 13 of the urn 10. In use, water is allowed to drain into the auxiliary vessel 14 from the urn 10 by opening the main faucet 12 of the urn until the auxiliary vessel 14 is full or a sufficient quantity of water has drained. The auxiliary vessel 14 is then removed from the urn and the hot (but no longer boiling) water in the auxiliary vessel 14 is then poured into a third vessel (not shown) thus avoiding direct contact with the boiling water in the urn and any foodstuff in the third vessel. This having been done, the auxiliary vessel 14 is reattached to the support 13 so as to be ready to be filled with hot water from the urn 10 when the main faucet 12 is again opened.

Figs. 5 and 6 show pictorially other embodiments of the auxiliary vessel 14 having an orifice 17 (constituting an outlet) for draining a quantity of liquid contained therein into another vessel. In Fig. 5 the orifice 17 is shown on a lower surface of the auxiliary vessel 14 so that, in use, when the main faucet 12 is opened hot water pours into the auxiliary vessel 14 and immediately drains out of the orifice 17. In this case, a third vessel must be disposed underneath the orifice 17 so as to catch the hot water that drains from the auxiliary vessel 14.

Fig. 6 shows a more sophisticated approach where the outlet is on a side wall of the auxiliary vessel 14 and includes a faucet 18 (constituting an auxiliary faucet) for controlling draining of liquid therefrom.

Referring again to Figs. 1 to 4, the support 13 may be adapted to allow the auxiliary vessel 14 to be removably attached to the urn via the bracket 16. For example, the support 13 may be in the form of a track for accommodating a rider member on the or auxiliary vessel 14; or it may be annular for accommodating the auxiliary vessel 14, possibly of split form so as to leave a gap for allowing the auxiliary vessel 14 to be inserted and removed without catching the faucet 18 of the auxiliary vessel 14.

Having explained the principle of the invention, various modifications will now be described. For example, while in the urn as described above with reference to the figures the support 13 is adapted for removably attaching the auxiliary vessel 14 to the urn, in those cases where the auxiliary vessel 14 has a water outlet such as the orifice 17 or the auxiliary faucet 18, the auxiliary vessel 14 could feasibly be fixedly attached since hot water pouring into the auxiliary vessel 14 from the urn 10 would still drain into any third vessel disposed beneath the outlet of the auxiliary vessel 14.

Electric urns that are commonly used by orthodox Jews on Shabbat have a thermostatically controlled heating element in their base. Since it is forbidden to boil the water on the Shabbat, cold water is added to the urn before the onset of the Shabbat and boiled before the Shabbat commences. The thermostat ensures that the temperature of the water is maintained at nearly 100°C. Commonly, an automatic cutout interrupts the flow of current to the heating element if the heating element is exposed as a result of the water boiling away thereby preventing the heating element from burning out. However, regardless of whether such a cutout is provided, the main faucet 12 is disposed at a height that is several centimeters above the heating element so that when the level of water in the urn falls below that of the main faucet, such that water no longer drains from the urn on opening the main faucet, there is still some residual water in the urn that covers the heating element and prevents it from burning out.

As a result of the above considerations, the main faucet 12 is invariably raised above the base of the urn. This is true not only in electric urns, but also in urns that are intended to be heated on the gas since here, too, it is desirable that water remain in the urn even when it is nominally drained. Electric urns are typically placed on a working surface such as a kitchen surface and the height of the faucet not only facilitates the safety requirements as explained above, but also helps to provide sufficient clearance to slide or otherwise introduce a cup or other utensil underneath the faucet for obtaining hot water. However, depending on the design of the urn, in some urns even this amount of clearance is not adequate and in order to increase the clearance in such urns, it is common to provide legs 19 that raise the whole urn.

In order to raise the urn still further, Fig. 1 shows leg extenders 20 that are attached to each of the legs 19. The leg extenders 20 may be fastened to the legs 19 in any known manner either fixedly or removably, and constitute a height raiser for raising the urn 10 off a working surface on which the urn is placed so as to increase the clearance between the main faucet 12 and the working surface. This allows the auxiliary vessel 14 to be of sufficient height to contain a full cup of water whilst still being easily accommodated within the space between the main faucet 12 and the working surface. Such an approach is particularly appropriate for adapting an existing urn for attachment to an auxiliary vessel. Alternatively, as shown in Fig. 2 the legs 19 may be of sufficient height, this being particularly suitable for an urn that is custom manufactured for attaching the auxiliary vessel thereto.

In Fig. 1 the support 13 is mounted on the side wall 11 of the urn, this being particularly suitable for an urn that is custom manufactured for attaching the auxiliary vessel thereto. In Fig. 2 the support 13 is shown integral with or attachable to the legs 19. Likewise, the support 13 may be integral with or attachable to the leg extenders 20 or any other form of height extender.

Fig. 7 shows an alternative height extender 21 being particularly adapted to support a lower surface of an urn having no legs, as is usually the case with urns that are adapted to be placed on a gas ring or electric hot plate, although conventional electric urns are also available of such construction. As shown in Fig. 7, the height extender 21 includes an annular frame 22 having legs 23. However, it will be clear that the height extender 21 may have many forms compatible with raising the urn so that as to increase the clearance between the main faucet 12 and the working surface on which the urn is placed.

The invention also contemplates an auxiliary vessel 14 that is provided as a separate accessory and is adapted for attaching to an urn 10 as described such that in use an opening 15 of the auxiliary vessel is aligned with the main faucet 12 of the urn, whereupon opening the main faucet 12 allows hot liquid in the urn to pour directly into the auxiliary vessel 14. Conceivably, such an auxiliary vessel having an auxiliary faucet 18 as shown in Fig. 6 may be provided with a support for attaching a third vessel thereto such that in use an opening of the third vessel is aligned with the auxiliary faucet of the auxiliary vessel, whereupon opening the auxiliary faucet allows hot liquid in the auxiliary vessel to pour directly into the third vessel. Alternatively, the auxiliary vessel may include a third vessel integrally attached thereto. In such case, there is no need for a faucet to be provided in the auxiliary vessel although this can be optionally provided, it being sufficient for the auxiliary vessel to have an opening as shown in Fig. 5 so that water drains from the urn into the auxiliary vessel and then into the third vessel. This stringency may be preferable to some authorities who insist that boiling water in the urn undergo a further degree of cooling when making tea, since the pouring of hot water directly on to tea constitutes cooking and is therefore proscribed on the Shabbat.

Likewise, in order to adapt existing urns for use with the invention, there may be provided a kit comprising the auxiliary vessel and a support for anchoring to the urn and being adapted for attaching the auxiliary vessel thereto such that in use an opening of auxiliary vessel is aligned with the main faucet of the urn, whereupon opening the main faucet allows hot liquid in the urn to pour directly into the auxiliary vessel.

It will be appreciated that other modifications will be apparent to those of average skill in the art without departing from the scope of the invention as claimed.

## Claims

1. An urn (10) for use by Orthodox Jews on the Sabbath, said urn having a body portion (11) for containing hot liquid and maintaining it at a temperature higher than 40°C and a main faucet (12) depending from a side wall thereof for controllably siphoning off a quantity of said hot liquid, said urn further comprising a support (13) for supporting an auxiliary vessel (14) having an opening (15) aligned with the main faucet so that opening the main faucet allows hot liquid to pour directly into the auxiliary vessel, thereby preventing or reducing accidental pouring of the hot liquid into a vessel containing food or powdered beverage.

2. The urn according to claim 1, wherein the auxiliary vessel is provided on an internal surface thereof with a lining of thermally insulating material.

3. The urn according to claim 1, wherein the auxiliary vessel is formed of thermally insulating material.

4. The urn according to any one of claims 1 to 3, wherein the auxiliary vessel is provided with an outlet (18) for draining a quantity of liquid contained therein into another vessel.

5. The urn according to claim 4, wherein the auxiliary vessel includes a support for attaching a third vessel thereto such that in use an opening of the third vessel is aligned with the outlet of the auxiliary vessel, thus allowing hot liquid in the auxiliary vessel to pour directly into the third vessel.

6. The urn according to claim 5, wherein the third vessel is integrally attached to the auxiliary vessel.

7. The urn according to claim 4, wherein the outlet is on a side wall of the auxiliary vessel and includes an auxiliary faucet (18) for controlling draining of liquid therefrom.

8. The urn according to any one of claims 1 to 7, wherein the support (13) is adapted for removably attaching the auxiliary vessel to the urn.

9. The urn according to any one of claims 1 to 8, further including a height raiser (21) for raising the urn so increase a clearance between the main faucet and a surface on which the urn is placed.

10. The urn according to claim 9, wherein the support is integral with the height raiser.

11. The urn according to claim 9, wherein the urn is equipped with legs (19) and the height raiser (21) comprises leg extenders adapted to be attached to each of the legs.

12. The urn according to claim 11, wherein the support is integral with one of the leg extenders.

13. The urn according to any one of claims 1 to 8, being so dimensioned that there is sufficient clearance for accommodating the auxiliary vessel.

14. The urn according to any one of claims 1 to 13, wherein the auxiliary vessel is integral with the urn.

15. An auxiliary vessel (14) for attaching to an urn (10) according to any one of claims 1 to 14, such that in use an opening (15) of the auxiliary vessel is aligned with the main faucet (12) of the urn, whereupon opening the main faucet allows hot liquid in the urn to pour directly into the auxiliary vessel.

16. The auxiliary vessel according to claim 15, including an internal surface thereof a lining of thermally insulating material.

17. The auxiliary vessel according to claim 15, being formed of thermally insulating material.

18. The auxiliary vessel according to any one of claims 15 to 17, including an outlet (18) for draining a quantity of liquid contained therein into another vessel.

19. The auxiliary vessel according to claim 18, including a support for attaching a third vessel thereto such that in use an opening of the third vessel is aligned with the outlet of the auxiliary vessel, thus allowing hot liquid in the auxiliary vessel to pour directly into the third vessel.

20. The auxiliary vessel according to claim 19, wherein the third vessel is integrally attached to the auxiliary vessel.

21. The auxiliary vessel according to claim 18, wherein the outlet is on a side wall of the auxiliary vessel and includes a faucet (18) aligned for controlling draining of liquid therefrom.

22. A kit for adapting an urn for use by Orthodox Jews on the Sabbath, said urn (10) having a body portion (11) for containing hot liquid and maintaining it at a temperature higher than 40°C and a main faucet (12) depending from a side wall of the urn for controllably siphoning off a quantity of said hot liquid, so as to siphon hot liquid directly into an auxiliary vessel, said kit comprising:
an auxiliary vessel (14); and
a support (16) for anchoring to the urn and being adapted for supporting the auxiliary vessel such that in use an opening (15) of auxiliary vessel is aligned with the main faucet of the urn, whereupon opening the main faucet allows hot liquid in the urn to pour directly into the auxiliary vessel, thereby preventing or reducing accidental pouring of the hot liquid into a vessel containing food or powdered beverage.

23. The kit according to claim 22, further comprising a height raiser (21) for raising the urn so increase a clearance between the main faucet and a surface on which the urn is placed.

24. The kit according to claim 23, wherein the urn is equipped with legs (19) and the height raiser comprises leg extenders adapted to be attached to each of said legs.

25. The kit according to claim 24, wherein the support is integral with one of the leg extenders.
